# DEMANDE DE BREVET EUROPEEN

(11) **EP 1 065 872 A1**
(43) Date de publication de la demande: **03.01.2001**
(21) Numéro de dépôt: 00401736.4
(22) Date de dépôt: 19.06.2000
(51) Int. Cl.: H04M 7/00, H04Q 3/00

(54) **Procédé de routage alternatif d'appels longue distance destinés à des numéros taxés à l'appelé**

(30) Priorité: 01.07.1999 FR 9908500
(71) Demandeur: ALCATEL, 75008 Paris (FR)
(72) Inventeur: Rousseau, Jean-René, 95000 Neuville S/Oise (FR)
(74) Mandataire: Sciaux, Edmond

(57) **Abrégé**

Procédé pour le routage d'appels longue distance destinés à un numéro taxé à l'appelé, auquel l'accès est prévu par un réseau de télécommunications intelligent (1) comprenant des centres de rattachement (3) d'unités de communication (5), notamment des terminaux ou des systèmes de desserte, identifiées par des numéros d'appel, lorsqu'il existe un réseau de transmission par paquets (2), sous protocole IP, dit second réseau, qui permet aussi de mettre en communication les unités.

On substitue, au niveau du réseau de télécommunications (1) ou au niveau du réseau de transmission par paquets (2), la fourniture du numéro d'appel d'une passerelle d'entrée (10A) au second réseau par l'intermédiaire de laquelle une communication peut être établie avec une passerelle de sortie (10B) donnant accès à l'unité (5B) appelée, à la fourniture de la traduction du numéro d'appel taxé nécessaire au routage de l'appel au travers du réseau intelligent (1).

## Description

L'invention concerne un procédé de routage alternatif des appels longue distance destinés à un numéro au moins partiellement taxé à l'appelé, auquel l'accès est prévu par l'intermédiaire d'un réseau de télécommunications intelligent.

De manière connue, lorsqu'un centre de commutation d'un réseau de télécommunications intelligent, reçoit un appel à destination d'une unité de communication appelée, telle que notamment un terminal ou un système, dotée d'un numéro d'appel pour lequel il n'est pas en mesure d'établir une communication par manque d'informations concernant le routage de l'appel, il se met en communication avec un serveur de traduction apte à lui fournir les indications dont il a besoin, à partir des indications dont il dispose. Ce serveur est prévu accessible par l'intermédiaire d'une interface standard appropriée, telle que classiquement une interface d'accès N°7 dont les couches basses et une couche applicative, telle qu'lNAP sont exploitées. Le serveur renvoie en arrière les indications nécessaires à la poursuite du routage par le centre de commutation ayant interrogé le serveur. Les indications fournies par le serveur de traduction sont ici supposées correspondre au numéro d'appel du destinataire de l'appel dans le plan d'adressage du réseau. Elles peuvent classiquement varier en fonction de conditions prédéterminées qui peuvent être très diverses et qui prennent en compte des facteurs tels que la position géographique de l'appelant, l'heure et/ou la date d'appel, ou autre. Ces conditions conduisent à la sélection d'un numéro appelé parmi plusieurs possibles en fonction des facteurs de détermination alors à prendre en considération.

Une telle procédure d'obtention d'indications relatives au routage d'un appel vers son destinataire est notamment exploitée, lorsque le numéro appelé est un numéro dit taxé à l'appelé. Ce dernier prend alors en charge le paiement de la communication établie par tout tiers qui l'appelle et ce éventuellement quelle que soit la provenance de l'appel qui peut donc être un appel longue distance. Le coût des appels qui sont réalisés à destination d'un numéro taxé à l'appelé peut donc être particulièrement élevé, notamment lorsque le numéro concerné est un numéro général de mise en communication avec un service dont la vocation est d'être appelé par de nombreux utilisateurs qui sont susceptibles d'être largement dispersés géographiquement, comme cela est le cas par exemple pour un service de réservation de places d'avion. Le titulaire d'un tel numéro taxé à l'appelé est donc particulièrement désireux de trouver les moyens qui lui permettent de réduire le coût de ce service en particulier, dans le cas des appels longues distances qui peuvent être particulièrement onéreux.

Il est connu par ailleurs des réseaux de transmission longue distance par paquets et notamment des réseaux qui mettent en application le protocole Internet dit IP, notamment pour l'identification de l'appelant et de l'appelé, et qui permettent de réduire très notablement les coûts dans le cas de communications longue distance. Ceci est obtenu en substituant deux appels locaux d'accès au réseau IP, peu coûteux, à un coûteux appel longue distance, via un réseau intelligent de type téléphonique. Une telle substitution est particulièrement intéressante, lorsque l'appel longue distance requiert un accès à un serveur de traduction via une interface de type N°7 qui implique la mise en oeuvre d'un protocole relativement lourd. Toutefois de manière habituelle, il n'est pas prévu qu'un appelant ordinaire puisse se connecter à un tel réseau IP par une numérotation d'appel correspondant à un numéro taxé à l'appelé, en particulier si ce réseau IP est à accès réservé.

L'invention propose donc un procédé pour le routage alternatif des appels longue distance destinés à un numéro au moins partiellement taxé à l'appelé, auquel l'accès est prévu par l'intermédiaire d'un réseau de télécommunications intelligent comprenant des unités de communication, notamment des terminaux ou des systèmes de desserte, reliés à des centres de rattachement et identifiés par des numéros d'appel ; consistant à établir une communication via un réseau de transmission par paquets, notamment de type IP, dit second réseau, qui permet de mettre en communication une des unités alors appelante et une unité correspondant au numéro appelé, via notamment leurs centres de rattachement respectifs et via une passerelle d'entrée au second réseau et une passerelle de sortie donnant accès à une unité correspondant au numéro appelé ; un adressage spécifique, tel qu'un adressage IP, étant exploité par la passerelle d'entrée pour sa mise en liaison avec la passerelle de sortie ;
**caractérisé** en ce qu'il consiste à traduire le numéro appelé en un numéro d'appel d'une passerelle d'entrée au moyens de tables situées dans un centre serveur de traduction du second réseau.

L'invention a aussi pour objet un serveur pour la mise en oeuvre de ce procédé.

L'invention, ses caractéristiques et ses avantages sont précisés dans la description qui suit en liaison avec la figure unique mentionnée ci-dessous.

La figure unique présente un schéma représentatif d'un ensemble de télécommunications comportant un réseau intelligent doublé par un réseau IP pour l'établissement de communications entre des unités de communication d'abonnés.

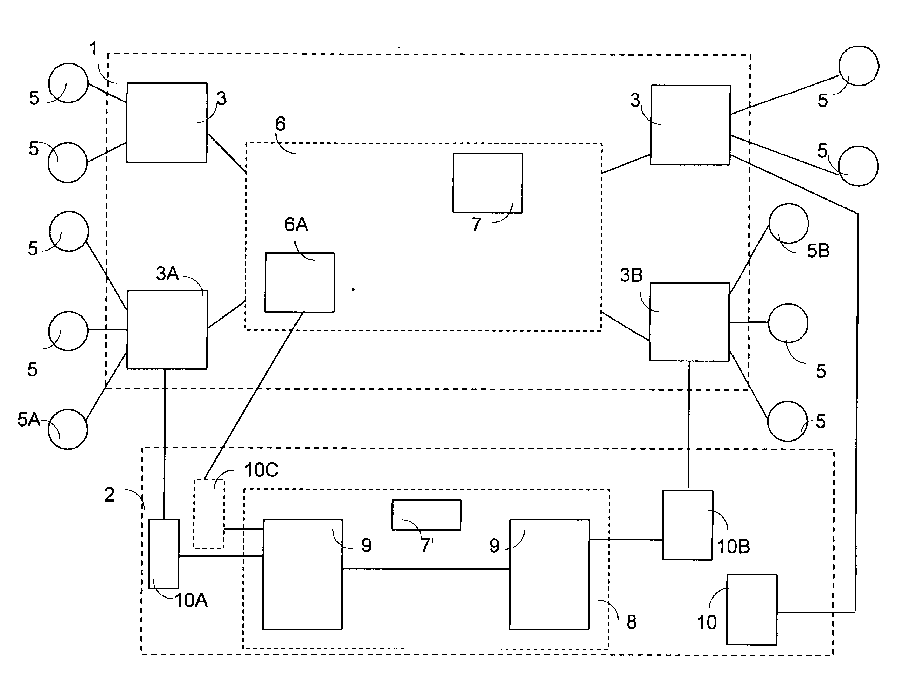

L'ensemble de télécommunications schématisé sur la figure 1 est supposé constitué d'un classique réseau intelligent de télécommunications 1 et par exemple un classique réseau téléphonique et d'un réseau parallèle 2, de type IP, classiquement organisé pour permettre des échanges de données numériques ou numérisées mises sous forme de paquets entre des unités de communication. Les unités communiquant par l'intermédiaire de l'ensemble sont par exemple des terminaux ou encore des systèmes de desserte, elles sont individuellement couplées à l'un et/ou l'autre de ces deux réseaux. Les systèmes de desserte sont par exemple du type PABX, réseau local ou équivalent.

Le réseau intelligent 1 est par exemple constitué de centraux de commutation à programme enregistrée, tels que des centraux de type E10, il comporte des centres de rattachement 3 pour des lignes L affectées de numéros d'appel qui desservent des abonnés équipés d'unités de communication 5, susceptibles d'être très diverses. Les centres de rattachement 3 sont reliés entre eux dans le cadre du réseau intelligent 1 par l'intermédiaire d'un ensemble 6 de centres de transit. Cet ensemble 6 est susceptible d'inclure des centres serveurs remplissant des fonctions déterminées, tels que par exemple un ou des centres serveurs de traduction, ici symbolisés par un serveur 7, tel qu'évoqué dans le préambule de cette demande. L'établissement d'une communication entre une unité 5A appelante et une unité 5B appelée est obtenue par l'envoi du numéro d'appel de l'unité 5B par l'unité 5A au centre de rattachement 3A dont elle dépend et par établissement d'un chemin par l'intermédiaire de ce centre au travers de l'ensemble 6. Ce chemin est déterminé avec l'assistance d'un centre serveur de traduction ou point de commande de service 7. Il conduit jusqu'à l'unité 5B, via le centre de rattachement 3B de cette unité.

Le réseau IP référencé 2 est supposé être un réseau de transmission voix et/ou données par paquets qui s'étend au moins partiellement parallèlement au réseau intelligent 1, c'est par exemple un réseau de type INTRANET ou éventuellement le réseau INTERNET, lui-même.

Il comporte un ensemble 8 chargé d'assurer la transmission des informations de communication sous la forme de paquets, cette transmission étant assurée par l'intermédiaire de routeurs 9 interconnectés qui exploitent un protocole, tel que le protocole INTERNET IP, pour leurs échanges d'informations.

La connexion d'une unité 5 au réseau 2 s'effectue par l'intermédiaire d'une passerelle 10, telle que 10A pour l'unité appelante 5A évoquée plus haut, cette passerelle étant accessible par l'unité au travers du réseau intelligent 1, via un centre de rattachement. Dans le cas d'unités téléphoniques destinées à assurer des communications vocales, la passerelle est par exemple une passerelle de type VolP, prévue pour permettre des communications vocales entre des unités en exploitant les procédures prévues par le protocole IP. Chaque passerelle, telle 10A ou 10B, reliée au réseau intelligent est repérée par un ou éventuellement plusieurs numéros d'appel, de même qu'une unité 5 au niveau de ce réseau. Ces numéros d'appel peuvent être utilisés pour caractériser le destinataire appelé.

Lorsqu'une unité quelconque 5A appelle un numéro taxé à l'appelé il envoie ce numéro au centre de rattachement 3A dont il dépend dans le réseau intelligent 1. Selon l'invention, il est prévu qu'un numéro d'appel de passerelle d'entrée au réseau 2 soit substitué par l'intermédiaire d'un centre serveur de traduction 7 du réseau intelligent 1 au numéro d'appel d'unité correspondant à la traduction du numéro taxé à l'appelé qui aurait autrement été fourni au centre de rattachement de l'unité appelante, aux fins d'établissement d'un chemin de routage d'appel au travers de l'ensemble 6. Ceci peut être réalisé de manière simple au niveau des tables contenant les numéros d'appel d'unités de communication réels correspondant aux numéros taxés à l'appelé que stocke un centre serveur de traduction 7 du réseau intelligent ou éventuellement un serveur 7' équivalent du second réseau. Dans les cas les plus simples un numéro d'appel d'une passerelle d'entrée déterminée y est substitué au numéro d'appel réel d'unité auquel correspond un numéro taxé à l'appelé. Mais il est également prévu que de plusieurs numéros d'appel de passerelles soient mis à disposition, pour que notamment le second réseau offre au moins les mêmes possibilités que celles offertes par le réseau intelligent en matière de sélection en fonction de conditions déterminées à l'avance.

Comme il est connu, les numéros taxés à l'appelé, tels que par exemple les numéros commençant par 800 en France, peuvent correspondre à des numéros d'appel réels divers qui commencent classiquement par un indicatif de zone, tel que par exemple 01 en France, et qui sont éventuellement variables au cours du temps dans des circonstances déterminées. Un même numéro taxé à l'appelé permet éventuellement d'établir des communications avec des unités de communication différentes identifiées chacune par un numéro d'appel individuel qui reste inconnu de l'appelant. Le choix de celles des unités de communication ainsi susceptibles d'être appelées est alors effectué en fonction de critères établis. Ces critères sont par exemple la proximité de l'unité destinée à desservir l'appel vis-à-vis de l'unité appelante, ou le jour et/ou encore l'heure de l'appel, etc...

Selon l'invention, l'appel effectué par une unité, telle que 5A, au moyen d'un numéro taxé à l'appelé est donc dirigé, après interrogation d'un serveur de traduction et via le centre de rattachement de cette unité appelante, vers une passerelle d'entrée, telle 10A, du second réseau 2.

Cette passerelle désignée par le centre serveur de traduction auquel s'est adressé le centre de rattachement de l'unité appelante. Elle est préférablement la plus proche possible de ce centre de rattachement, de manière que, de préférence, la communication qui s'établit entre l'unité appelante et cette passerelle soit préférablement une communication à faible coût, soit donc ordinairement une communication locale ou à courte distance. Ceci est schématisé sur la figure où dans une première hypothèse l'unité appelante 5A est reliée à une passerelle d'entrée 10A directement par son centre de rattachement 3A et où selon une seconde hypothèse, il est nécessaire d'utiliser une autre passerelle d'entrée 10C accessible, via le centre de rattachement 3A et un centre 6A de l'ensemble 6.

A réception de l'appel, la passerelle d'entrée se met en communication avec la passerelle de sortie qui dessert l'unité, telle 5B, indiquée comme correspondant au numéro taxé à l'appelé. Cette mise en communication au travers du réseau 2 est réalisée sous protocole IP par l'intermédiaire d'au moins un des routeurs 9 de ce réseau 2, dans les conditions habituelles prévues pour une telle opération.

La passerelle de sortie est supposée choisie la plus proche possible du centre de rattachement de l'unité appelée, de manière que la communication qui s'établit entre cette unité appelée et cette passerelle, via ce centre de rattachement, soit préférablement une communication locale.

Ce procédé de routage alternatif présente un grand intérêt pour le détenteur d'un numéro d'appel taxé à l'appelé, puisqu'il permet d'exploiter les avantages offerts par un réseau de transmission par paquets sous protocole IP dans le cas d'appels longue distance dont le coût est très élevé par l'intermédiaire d'un réseau intelligent classique, avec un minimum de modifications à partir du moment où existe un réseau parallèle de transmission par paquets exploitable pour interconnecter à des unités de communication dotées de numéros d'appel taxés à l'appelé avec les diverses unités de communication susceptibles de les appeler.

## Revendications

1. Procédé pour le routage alternatif des appels longue distance destinés à un numéro au moins partiellement taxé à l'appelé, auquel l'accès est prévu par l'intermédiaire d'un réseau de télécommunications intelligent (1) comprenant des unités de communication (5), notamment des terminaux ou des systèmes de desserte, reliés à des centres de rattachement (3) et identifiés par des numéros d'appel ; consistant à établir une communication via un réseau de transmission par paquets (2), notamment de type IP, dit second réseau, qui permet de mettre en communication une des unités alors appelante (5A) et une unité correspondant au numéro appelé (5B), via notamment leurs centres de rattachement respectifs (3A, 3B) et via une passerelle d'entrée (10A) au second réseau et une passerelle de sortie (10B) donnant accès à une unité (5B) correspondant au numéro appelé ; un adressage spécifique, tel qu'un adressage IP, étant exploité par la passerelle d'entrée pour sa mise en liaison avec la passerelle de sortie ;
**caractérisé** en ce qu'il consiste à traduire le numéro appelé en un numéro d'appel d'une passerelle d'entrée (10A) au moyens de tables situées dans un centre serveur (7') de traduction du second réseau (2).

2. Serveur (7') apte à être inséré dans un réseau de transmission par paquets (2), notamment de type IP, dit second réseau, pour le routage alternatif des appels longue distance destinés à un numéro au moins partiellement taxé à l'appelé, auquel l'accès est prévu par l'intermédiaire d'un réseau de télécommunications (1) comprenant des unités de communication (5), notamment des terminaux ou des systèmes de desserte, reliés à des centres de rattachement (3) et identifiés par des numéros d'appel ;
comportant des moyens pour établir une communication via ce réseau de transmission par paquets (2), entre une des unités alors appelante (5A) et une unité correspondant au numéro appelé (5B), via notamment leurs centres de rattachement respectifs (3A, 3B) et via une passerelle d'entrée (10A) au second réseau et une passerelle de sortie (10B) donnant accès à une unité (5B) correspondant au numéro appelé ; un adressage spécifique, tel qu'un adressage IP, étant exploité par la passerelle d'entrée pour sa mise en liaison avec la passerelle de sortie ;
**caractérisé** en ce qu'il comporte des moyens pour traduire le numéro appelé en un numéro d'appel d'une passerelle d'entrée (10A).
